# EUROPEAN PATENT APPLICATION

(11) **EP 4 559 594 A1**
(43) Date of publication of application: **28.05.2025**
(21) Application number: 23842805.6
(22) Date of filing: 03.07.2023
(51) Int. Cl.: B21D 43/24, B65G 59/02, B65H 3/08, B65H 3/60

(54) **WORKPIECE SUPPLY SYSTEM, WORKPIECE SUPPLY METHOD, AND WORKPIECE SUPPLY PROGRAM**

(30) Priority: 22.07.2022 JP 2022116828
(71) Applicant: Amada Co., Ltd., Isehara-shi, Kanagawa 259-1196 (JP)
(72) Inventor: IKOMA, Shu, Isehara-shi, Kanagawa 259-1196 (JP)
(74) Representative: Grünecker Patent- und Rechtsanwälte PartG mbB
(86) International application number: PCT/JP2023/024585
(87) International publication number: WO 2024/018879

(57) **Abstract**

A workpiece supply system includes a magnet floater configured to separate an uppermost workpiece from a group of workpieces stacked on a loading area by magnetizing the group of workpieces, and a workpiece supply robot configured to be able to transport the uppermost workpiece from among the group of workpieces, wherein the magnet floater is configured to be able to switch between an on state where a magnetic force is applied to the group of workpieces and an off state where a magnetic force to be applied to the group of workpieces is reduced compared to the magnetic force in the on state, and the workpiece supply robot is configured to contact the uppermost workpiece when the magnet floater is in the off state and to separate the uppermost workpiece from the group of workpieces when the magnet floater is in the on state.

## Description

### Technical Field

The present invention relates to a workpiece supply system, a workpiece supply method, and a workpiece supply program.

### Background Art

In a conventional workpiece supply system in which workpieces stacked on a loading area are sequentially supplied toward the sheet material processing machine with a supply robot, there is used a magnet floater that levitates, with a magnetic force, and separates a plurality of stacked workpieces (Patent Literatures 1 and 2, and the like).

For example, Patent Literature 1 discloses a magnet floater including a non-magnetic floater cover, a floater main body with a magnet, and a position adjustment mechanism for adjusting the position of the floater main body in a direction approaching or separating from the floater cover. The magnet floater in Patent Literature 1 adjusts a magnetic force of the magnet acting on the workpiece by adjusting the position of the floater main body with the position adjustment mechanism, making it possible to adjust the levitation angle of an uppermost workpiece with respect to the horizontal direction. Furthermore, the magnet floater in Patent Literature 1 is provided with a scale on the floater cover or the like, making it possible to visualize the levitation angle of the uppermost workpiece.

In addition, Patent Literature 2 discloses a workpiece release device that includes an elevating mechanism for lifting an uppermost workpiece located at the uppermost position among a plurality of stacked workpieces, a magnet floater for releasing the uppermost workpiece lifted by the elevating mechanism from a lower workpiece located beneath the uppermost workpiece, and a compressed fluid spray nozzle for spraying compressed fluid on the side surfaces of the uppermost workpiece and the lower workpiece during the release to promote the release of the lower workpiece. The workpiece release device in Patent Literature 1 is designed to operate according to the following steps (1) to (4), thereby making it possible to release the uppermost workpiece from the lower workpiece and pick up only the uppermost workpiece.
(1) By elevating the elevating mechanism in a state where an attraction pad of the elevating mechanism is attracted to the uppermost workpiece, the uppermost workpiece and the lower workpiece closely attached to the uppermost workpiece are lifted up to a certain height.
(2) Then, by energizing and exciting the magnet floater, the lower workpiece closely attached to the uppermost workpiece is released by magnetic repulsion.
(3) During the excitation of the magnet floater, the mass of the uppermost workpiece is measured with a mass sensor of the elevating mechanism to determine whether or not the lower workpiece is still closely attached to the uppermost workpiece.
(4) When it is determined that the lower workpiece is closely attached to the uppermost workpiece, the compressed fluid is sprayed from the compressed fluid spray nozzle, thereby releasing the lower workpiece closely attached to the uppermost workpiece.

### Citation List

### Patent Literature

Patent Literature 1: Japanese Patent No. 6872968
Patent Literature 2: Japanese Patent Application Laid-Open Publication No. 2009-263084

### Summary of Invention

### Technical Problem

However, in the supply system using the magnet floater in Patent Literature 1, since the uppermost workpiece that is levitated in an inclined state with respect to a mounting surface is attracted to the supply robot, the attraction of the workpiece by the supply robot becomes insufficient, which may cause a transport failure of the workpiece. In addition, when the levitation angle of the workpiece becomes large, the workpiece may be stuck to the magnet floater.

The workpiece release device in Patent Literature 2 lifts the uppermost workpiece and the lower workpiece closely attached to the uppermost workpiece up to a certain height with the elevating mechanism, and then releases the lower workpiece with the magnet floater and the compressed fluid spray nozzle. In such a workpiece release device in Patent Literature 2, the lower workpiece is misaligned with respect to a group of workpieces in a planar direction due to an air resistance, an impact, or the like when the lower workpiece is released and fall, which may cause a transport failure of the workpiece. In particular, in the workpiece release device in Patent Literature 2, since a guide for supporting the workpieces is not provided on a spray direction side of the compressed fluid from the compressed fluid spray nozzle, the lower workpiece may be significantly misaligned when the compressed fluid is sprayed. In addition, depending on the size and fall distance of the lower workpiece, the workpiece may be stuck to the magnet floater.

One aspect of the present invention provides a workpiece supply system, a workpiece supply method, and a workpiece supply program that can suppress transport failure of a workpiece and reliably supply only an uppermost workpiece.

### Solution to Problem

A workpiece supply system according to one aspect of the present invention includes a magnet floater configured to separate an uppermost workpiece from a group of workpieces stacked on a loading area by magnetizing the group of workpieces, and a workpiece supply robot configured to be able to transport the uppermost workpiece from among the group of workpieces, wherein the magnet floater is configured to be able to switch between an on state where a magnetic force is applied to the group of workpieces and an off state where a magnetic force to be applied to the group of workpieces is reduced compared to the magnetic force in the on state, and the workpiece supply robot is configured to contact the uppermost workpiece when the magnet floater is in the off state and to separate the uppermost workpiece from the group of workpieces when the magnet floater is in the on state.

A workpiece supply method according to one aspect of the present invention includes bringing a workpiece supply robot into contact with an uppermost workpiece among a group of workpieces stacked on a loading area, applying, after the bringing, a stronger magnetic force than a magnetic force before the bringing to the group of workpieces, and separating the uppermost workpiece from the group of workpieces with the workpiece supply robot in a state where the magnetic force is applied to the group of workpieces.

A workpiece supply program according to one aspect of the present invention causes a workpiece supply robot to execute a robot contact process of contacting an uppermost workpiece before a magnetic force for separating the uppermost workpiece from a group of workpieces stacked on a loading area is applied to the group of workpieces, and a workpiece separation process of separating the uppermost workpiece from the group of workpieces in a state where the magnetic force for separating the uppermost workpiece from the group of workpieces is applied to the group of workpieces.

According to the workpiece supply system, the workpiece supply method, and the workpiece supply program according to one aspect of the present invention, the workpiece supply robot contacts the uppermost workpiece in a state where the magnetic force to be applied to the group of workpieces is reduced, thereby making it possible for the workpiece supply robot to securely hold the uppermost workpiece. In addition, according to the workpiece supply system, the workpiece supply method, and the workpiece supply program according to one aspect of the present invention, in a state where the magnetic force to be applied to the group of workpieces is strengthened, in order to separate the uppermost workpiece from the group of workpieces with the workpiece supply robot, the uppermost workpiece is reliably separated from the lower workpiece beneath the uppermost workpiece, enabling only the uppermost workpiece to be reliably transported. Furthermore, according to the workpiece supply system, the workpiece supply method, and the workpiece supply program according to one aspect of the present invention, it is possible to lift only the uppermost workpiece in a state where the lower workpiece is pressed toward the group of workpieces with a repulsive force from the uppermost workpiece, thereby making it possible to suppress misalignment and the like of the lower workpiece with respect to the group of workpieces.

### Advantageous Effect of Invention

According to the workpiece supply system, the workpiece supply method, and the workpiece supply program according to one aspect of the present invention, it is possible to suppress transport failure of the workpiece and reliably supply only the uppermost workpiece.

### Brief Description of Drawings

[Figure 1] Figure 1 is a schematic diagram illustrating a workpiece supply system according to one embodiment of the present invention.
[Figure 2] Figure 2 is a schematic diagram illustrating a magnet floater according to the present embodiment.
[Figure 3] Figure 3 is a schematic diagram illustrating a robotic hand of a workpiece supply robot according to the present embodiment.
[Figure 4] Figure 4 is a functional block diagram illustrating a control device according to the present embodiment.
[Figure 5] Figure 5 is a schematic diagram illustrating a releasing operation of an uppermost workpiece according to the present embodiment.
[Figure 6] Figure 6 is a schematic diagram illustrating the releasing operation of the uppermost workpiece according to the present embodiment.
[Figure 7] Figure 7 is a schematic diagram illustrating the releasing operation of the uppermost workpiece according to the present embodiment.
[Figure 8] Figure 8 is a schematic diagram illustrating the releasing operation of the uppermost workpiece according to the present embodiment.
[Figure 9] Figure 9 is a schematic diagram illustrating the releasing operation of the uppermost workpiece according to the present embodiment.
[Figure 10] Figure 10 is a schematic diagram illustrating the releasing operation of the uppermost workpiece according to the present embodiment.

### Description of Embodiment

The best embodiment for carrying out the present invention will be described below with reference to the drawings. It should be noted that the following embodiment does not limit the invention according to each claim, and not all combinations of features described in the embodiments are essential for the solution of the invention.

### [Overall Configuration of Workpiece Supply System]

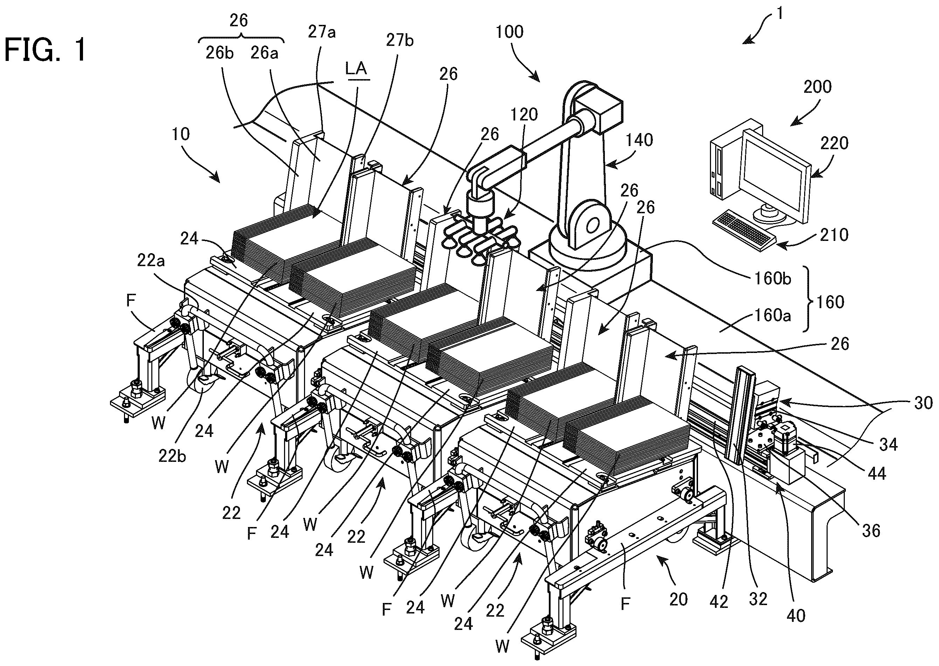

Figure 1 is a schematic diagram illustrating a workpiece supply system according to one embodiment of the present invention.

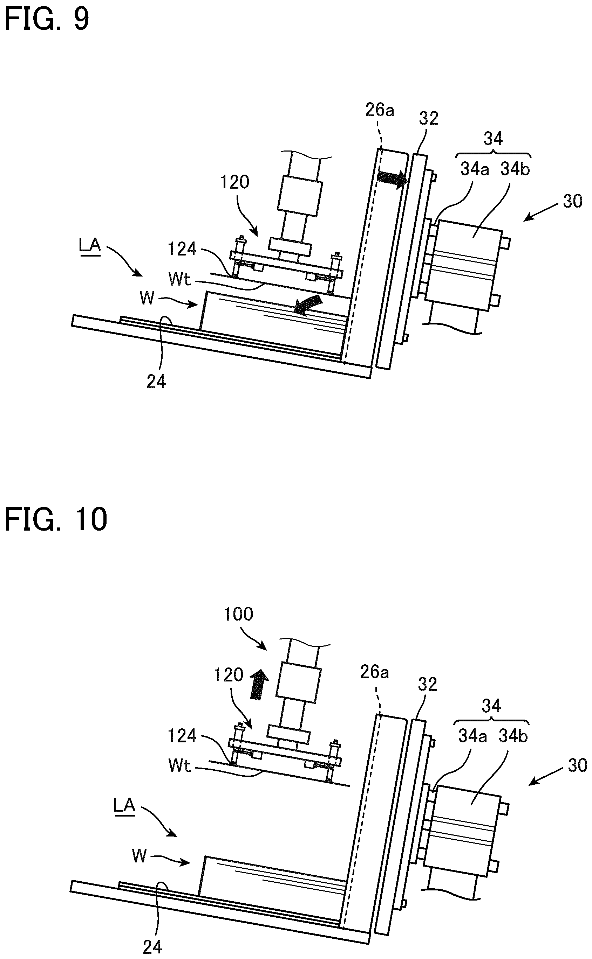

As illustrated in Figure 1, a workpiece supply system 1 according to the present embodiment includes a workpiece loading mechanism 10 in which a plurality of groups of workpieces W are loaded, a workpiece supply robot 100 configured to be able to transport an uppermost workpiece Wt (see Figure 10 and the like) from one of the plurality of groups of workpieces W stacked in the workpiece loading mechanism 10, and a control device 200 configured to be able to control the workpiece loading mechanism 10 and the workpiece supply robot 100. The workpiece supply system 1 according to the present embodiment may further include a processing machine (not illustrated) such as a bending machine, and an automatic processing system for the workpieces W may be configured with the workpiece supply system 1 together with the processing machine. When the automatic processing system is configured in this way, it is preferable that the workpiece supply robot 100 is arranged between the workpiece loading mechanism 10 and the processing machine.

In this specification, a "workpiece W" refers to a sheet-shaped magnetic body (sheet metal) to be transported, and a "group of workpieces W" (workpiece group) refers to a stack of workpieces W formed by stacking a plurality of workpieces W. Also, a "plurality of groups of workpieces W" mean that a plurality of groups of workpieces W formed in this way are arranged to be separated from each other in the planar direction.

### [Configuration of Workpiece Loading Mechanism]

As illustrated in Figure 1, the workpiece loading mechanism 10 includes a workpiece mounting table 20 that forms a loading area LA on which a group of workpieces W can be loaded, a magnet floater 30 that causes an uppermost workpiece Wt to be separated from the group of workpieces W stacked on the loading area LA by magnetizing the group of workpieces W, and a magnet moving mechanism 40 that causes the magnet floater 30 to be moved along the loading area LA.

The workpiece mounting table 20 includes a plurality of mounting table units 22, and frames F each that connect these plurality of mounting table units 22 to each other. Each mounting table unit 22 includes a handle 22a and wheels 22b, and is configured to be attachable to and detachable from the frame F. The workpiece mounting table 20 is configured to enable the number of mounting table units 22 to be installed to be increased or decreased. Note that the workpiece mounting table 20 is not limited to the illustrated configuration, and various configurations in which at least one group of workpieces W can be loaded can be adopted. For example, the workpiece mounting table 20 may be configured with only one mounting table unit 22.

Each mounting table unit 22 includes a mounting surface 24 on which a group of workpieces W is to be loaded, and an abutment plate part 26 for aligning ends of the workpieces W in the workpiece group mounted on the mounting surface 24.

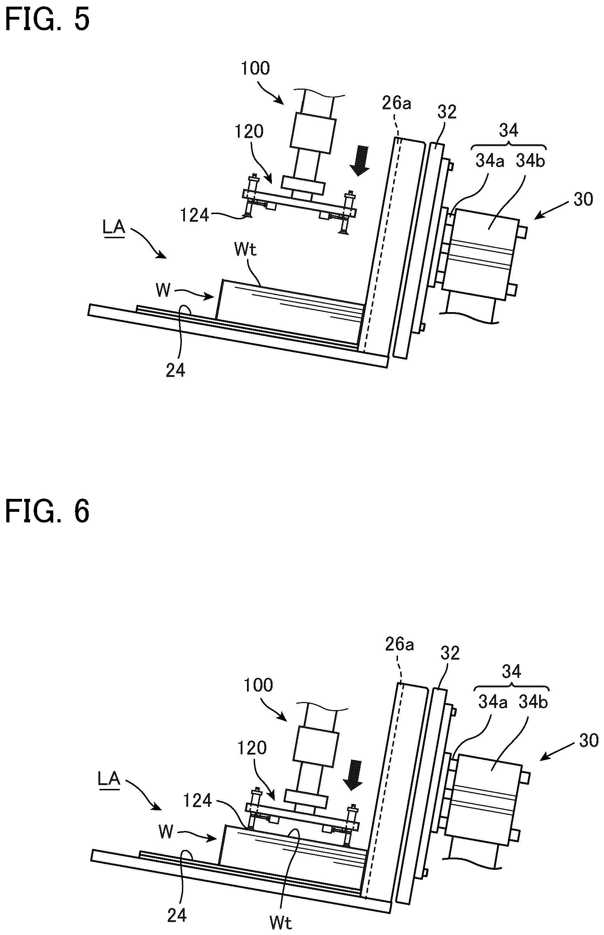

The mounting surface 24 is inclined with respect to the horizontal direction (the direction orthogonal to the vertical direction) so that the edge on the side opposite to the workpiece supply robot 100 is located slightly above the edge on the workpiece supply robot 100 side (see Figure 5 and the like). The plurality of mounting table units 22 are configured in which the mounting surfaces 24 are continuously or intermittently deployed along the planar direction to cooperate with each other so that the loading area LA is formed.

The abutment plate part 26 includes a rear plate part 26a formed of a non-magnetic sheet material, and a side plate part 26b arranged on one side edge of the rear plate part 26a. The rear plate part 26a is erected at the edge of the mounting surface 24 on the workpiece supply robot 100 side so as to be perpendicular to the mounting surface 24. The side plate part 26b extends from one side edge of the rear plate part 26a toward the mounting surface 24 side, so as to be perpendicular to the rear plate part 26a. The abutment plate part 26 is configured to be able to align the ends of the workpieces W in the workpiece group mounted on the mounting surface 24 by either abutting the corner portion of the group of workpieces W against the corner portion formed by the rear plate part 26a and the side plate part 26b, or by abutting one edge of the group of workpieces W against the rear plate part 26a.

In addition, on both side edges of the rear plate part 26a, a pair of flange parts 27a, 27b are arranged to extend at a right angle to the rear plate part 26a toward the workpiece supply robot 100 side from the respective side edges.

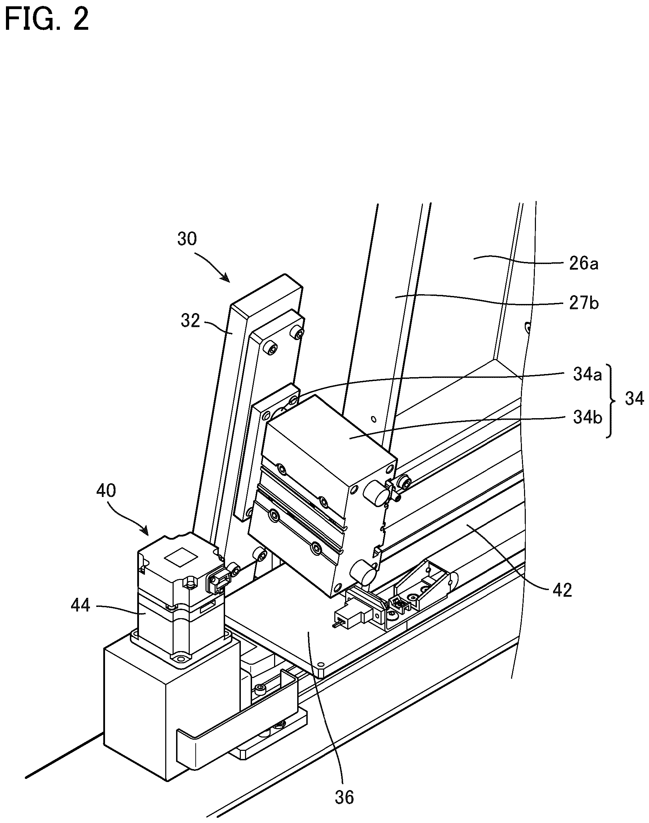

Figure 2 is a schematic diagram illustrating the magnet floater according to the present embodiment.

As illustrated in Figures 1 and 2, the magnet floater 30 includes a floater main body 32 capable of applying a magnetic force to the group of workpieces W, an advance and retreat mechanism 34 that causes the floater main body 32 to be moved in a direction of approaching or separating from the back surface of the rear plate part 26a of the abutment plate part 26, and a carriage base 36 capable of sliding along a guide rail 42, which will be described later, of the magnet moving mechanism 40.

The floater main body 32 is formed in a rectangular block shape approximately parallel to the rear plate part 26a of the abutment plate part 26, and includes a first magnet (first permanent magnet) and a second magnet (second permanent magnet) inside. The first magnet and the second magnet are each segmented along the up-down direction (height direction) of the floater main body 32, and the S pole of the first magnet and the N pole of the second magnet are facing each other in the left-right direction.

The advance and retreat mechanism 34 is, for example, a reciprocating linear motion mechanism such as a hydraulic cylinder or a pneumatic cylinder, and specifically includes a cylinder rod 34a connected to the back surface of the floater main body 32, and a cylinder 34b that causes the cylinder rod 34a to advance and retreat using hydraulic or pneumatic pressure. The advance and retreat mechanism 34 only needs to be configured to be able to move the floater main body 32 in the direction of approaching or separating from the back surface of the rear plate part 26a of the abutment plate part 26, and is not limited to the above-mentioned hydraulic cylinder and pneumatic cylinder, and, for example, an electric reciprocating linear motion mechanism may also be used.

The carriage base 36 holds the advance and retreat mechanism 34 to be relatively immovable, and is configured to slide along the guide rail 42, which will be described later, of the magnet moving mechanism 40 to cause the advance and retreat mechanism 34 and the floater main body 32 to be moved toward any group of workpieces W.

By providing the above configuration, the magnet floater 30 is configured to be able to switch between an on state where a magnetic force is applied to the group of workpieces W and an off state where a magnetic force to be applied to the group of workpieces W is reduced compared to the magnetic force in the on state. Specifically, when the floater main body 32 is caused to approach the rear plate part 26a of the abutment plate part 26 by the advance and retreat mechanism 34, the magnet floater 30 switches to the on state where the magnetic force is applied to the group of workpieces W. In addition, the magnet floater 30 is configured to switch to the off state where the magnetic force on the group of workpieces W is reduced or eliminated, when the floater main body 32 is caused to separate from the rear plate part 26a of the abutment plate part 26 by the advance and retreat mechanism 34.

The magnet floater 30 is configured to move to the mounting surface 24 on which the group of workpieces W to be transported is mounted, when the magnet moving mechanism 40 is controlled by a magnet control unit 240, which will be described later. In addition, the magnet floater 30 is configured to switch from the off state to the on state, when the advance and retreat mechanism 34 is controlled by the magnet control unit 240, which will be described later, during a time period from when the workpiece supply robot 100 contacts the uppermost workpiece Wt of the group of workpieces W to be transported until it lifts the uppermost workpiece Wt. Furthermore, the magnet floater 30 is configured to switch from the on state to the off state between a first elevating operation and a second elevating operation, which will be described later, of the workpiece supply robot 100, and more specifically, during a stopping operation, which will be described later, of the workpiece supply robot 100.

In this specification, the "on state" refers to a state where a magnetic force, enough to allow levitation of the end of the uppermost workpiece Wt from the lower workpiece W beneath the uppermost workpiece Wt, is applied to the group of workpieces W, and the "off state" refers to a state where a magnetic force weaker than the magnetic force in the on state is applied to the group of workpieces W. In this specification, the "off state" not only refers to a state where no magnetic force is applied to the group of workpieces W, but also includes states where, for example, a weak magnetic force is applied such that the end of the uppermost workpiece Wt is slightly levitated from the lower workpiece W and where a very weak magnetic force is applied such that the end of the uppermost workpiece Wt does not separate from the lower workpiece W.

As illustrated in Figure 1, the magnet moving mechanism 40 includes the guide rail 42 extending across the plurality of mounting table units 22 of the workpiece loading mechanism 10, and a drive section 44 for generating a driving force to move the carriage base 36 of the magnet floater 30 along the guide rail 42. The magnet moving mechanism 40 is configured to drive the drive section 44 to enable the magnet floater 30 to be moved along the guide rail 42 and to enable the magnet floater 30 to be stopped at any position. In the present embodiment, the magnet moving mechanism 40 is a linear motion mechanism that reciprocates the magnet floater 30 linearly along the guide rail 42, but is not limited to this. The drive section 44 can preferably use an electric motor, but is not limited to this.

### [Configuration of Workpiece Supply Robot]

The workpiece supply robot 100 is arranged between the workpiece loading mechanism 10 and a transport destination (for example, the processing machine or the like) of the workpiece W**,** and is configured to hold the workpiece W on the workpiece loading mechanism 10 and to transport the workpiece W toward the transport destination such as the processing machine.

Specifically, as illustrated in Figure 1, the workpiece supply robot 100 includes a moving mechanism 160 for moving the workpiece supply robot 100, a robotic hand 120 capable of holding the workpiece W, and an arm part 140 for causing the robotic hand 120 to approach or separate from the workpiece W**.**

The moving mechanism 160 is a so-called linear motion mechanism that includes a rail part 160a that is laid on a floor surface, a base table 160b that is movable along the rail part 160a, and a base table drive section (not illustrated) that drives the base table 160b, and is configured to move the workpiece supply robot 100 on the floor surface based on a control signal from a robot control unit 230, which will be described later, of the control device 200. Note that the moving mechanism 160 can employ various known configurations, and thus detailed description thereof will be omitted.

One end of the arm part 140 is connected to the base table 160b of the moving mechanism 160, the other end thereof is connected to the robotic hand 120, and the arm part 140 is configured to cause the robotic hand 120 to approach or separate from the workpiece W based on the control signal from the robot control unit 230 of the control device 200. In the present embodiment, the arm part 140 is an articulated arm including six control axes, and is configured to be able to perform not only transport of the workpiece W from the workpiece loading mechanism 10 but also transport (carry-in) of the workpiece W to the processing machine or the like, assistance of the processing (bending) on the workpiece W, and transport (carry-out) of a product (bent part) from the processing machine or the like. Note that the arm part 140 can employ various known configurations, and thus detailed description thereof will be omitted. Furthermore, the arm part 140 is not limited to the configuration of the articulated arm including the six control axes described above, and various known configurations can be arbitrarily employed.

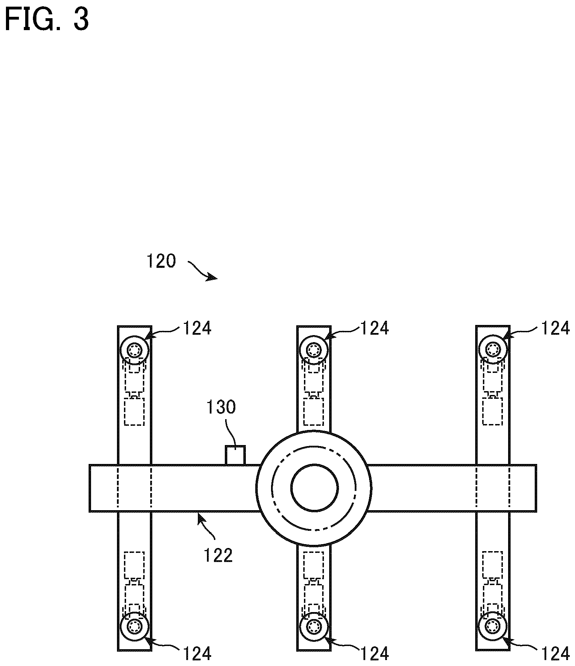

Figure 3 is a schematic diagram illustrating the robotic hand of the workpiece supply robot according to the present embodiment.

As illustrated in Figure 3**,** the robotic hand 120 includes a hand main body 122 detachably attached to a tip end of the arm part 140, and a plurality of attraction parts 124 attached to the hand main body 122 and configured to be able to hold the workpiece W. Each attraction part 124 is connected, via piping, to an air suction source (not illustrated) that sucks air. Each attraction part 124 includes, at a lower end thereof, a flat attraction pad that can be attracted to (can contact) a surface of the workpiece W**,** and is configured to be attracted to the surface of the uppermost workpiece Wt from among the group of workpieces W stacked on the workpiece mounting table 20 with a suction force of the air caused by the air suction source. Note that a shape of the hand main body 122 is not limited to an illustrated example, and can be arbitrarily changed in accordance with a shape and the like of the workpiece W. Furthermore, the robotic hand 120 is not limited to the attraction method described above, and various known configurations can be arbitrarily employed.

As illustrated in Figure 3, the robotic hand 120 further includes a surface detection unit 130 capable of detecting that the robotic hand 120 has contacted the workpiece W. The surface detection unit 130 is attached at any position on the hand main body 122 of the robotic hand 120 and is configured to be able to detect that the attraction parts 124 have contacted the surface of the uppermost workpiece Wt. As for the surface detection unit 130, various known configurations can be adopted in which the surface of the workpiece W can be detected, and, for example, a proximity sensor, a reflective photoelectric sensor, a photoreflector, and a force sensor can be arbitrarily adopted. In this specification, the phrase "has(have) contacted the surface of workpiece W" includes not only the case of having completely contacted the surface of the workpiece W but also the case of being in close proximity to the extent that it can be evaluated as having contacted the surface of the workpiece W.

The workpiece supply robot 100 is configured to contact the uppermost workpiece Wt when the magnet floater 30 is in the off state, and to separate the uppermost workpiece Wt from the group of workpieces W when the magnet floater 30 is in the on state, under the control of the robot control unit 230, which will be described later.

Specifically, the workpiece supply robot 100 is configured to be able to perform the first elevating operation of lifting the uppermost workpiece Wt from among the group of workpieces W and the second elevating operation of further lifting the uppermost workpiece Wt after the first elevating operation. At this time, the workpiece supply robot 100 operates so that the amount of elevation in the first elevating operation is less than the amount of elevation in the second elevating operation. For example, the first elevating operation may be an operation of elevating the uppermost workpiece Wt by a small amount so that the uppermost workpiece Wt is separated from the lower workpiece W beneath the uppermost workpiece Wt**,** and the second elevating operation may be an operation of moving the uppermost workpiece Wt to the transport destination (such as a processing machine).

In these first and second elevating operations, the workpiece supply robot 100 is configured to be able to transport the uppermost workpiece Wt in a state of being separated from the abutment plate part 26 of the magnet floater 30. That is, the workpiece supply robot 100 is configured to elevate the uppermost workpiece Wt in a state of being slightly (for example, a few millimeters) separated from the abutment plate part 26 so that no frictional resistance occurs between the uppermost workpiece Wt and the abutment plate part 26 rather than to cause the uppermost workpiece Wt to be elevated (slid) in a state where the uppermost workpiece Wt is in contact with the abutment plate part 26.

The workpiece supply robot 100 is also configured to be able to perform a stopping operation of stopping the elevation between the first elevating operation and the second elevating operation. The stop time of the workpiece supply robot 100 is preferably set to a time that allows the magnet floater 30 to change from the on state to the off state; for example, it is preferably set to about a few seconds to a few tens of seconds.

### [Configuration of Control Device]

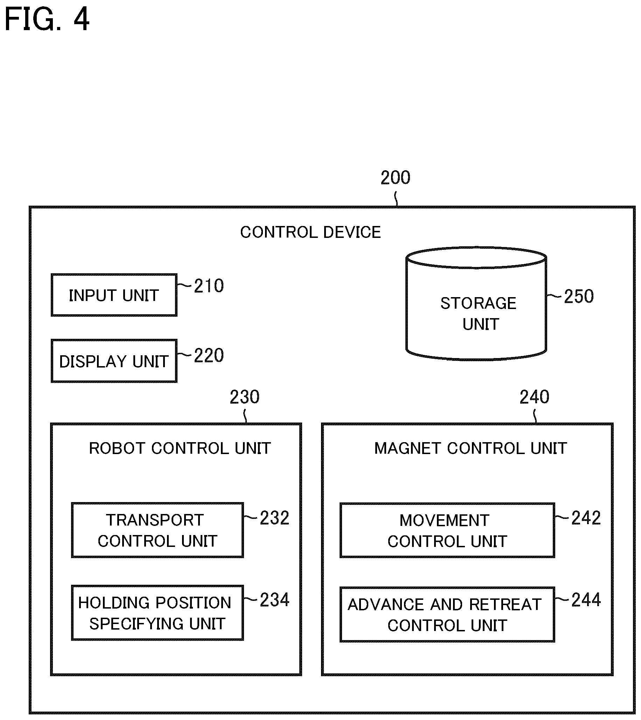

Figure 4 is a functional block diagram illustrating a control device according to the present embodiment.

As illustrated in Figure 4, the control device 200 includes an input unit 210, a display unit 220, the robot control unit 230, a magnet control unit 240, and a storage unit 250. Furthermore, the control device 200 is connected to the workpiece loading mechanism 10 and the workpiece supply robot 100 by various known configurations.

The input unit 210 is comprised of, for example, input devices such as a keyboard, a mouse, a press button switch, a tact switch, and a key lock switch, and operating the input unit 210 enables input of information normally required in the workpiece supply system 1.

The display unit 220 is provided with a display as a display device, and is configured to enable screen display and the like normally required in the workpiece supply system 1. The display unit 220 can be comprised of a touch panel having a function of the input unit 210. When the display unit 220 is comprised of a touch panel, a user can input, to the control device 200, various types of information by operating the display unit 220, for example.

Note that the configurations of the input unit 210 and the display unit 220 are not limited to the configurations described above, and they may be any configurations having similar functions (for example, display means, input means, and the like that can be used from a remote place).

The robot control unit 230, as illustrated in Figure 4, includes a transport control unit 232 and a holding position specifying unit 234.

The holding position specifying unit 234 performs a holding position specifying process of specifying a holding position of the robotic hand 120 of the workpiece supply robot 100 with respect to the workpiece W. Specifically, the holding position specifying unit 234 extracts coordinate data of a workpiece W and the holding position of the robotic hand 120 with respect to the workpiece W from the workpiece supply program of the storage unit 250, which will be described later, and specifies the holding position.

The transport control unit 232 is configured to enable computerized numerical control (CNC control) of the workpiece supply robot 100, and performs a robotic hand control process of releasing the uppermost workpiece Wt from the group of workpieces W.

Specifically, the transport control unit 232 is configured to control, when transporting (carrying out) the workpiece W from the workpiece loading mechanism 10, the moving mechanism 160 so that the arm part 140 reaches a position aligned with the group of workpieces W to be transported among a plurality of groups of workpieces W loaded in the workpiece loading mechanism 10, based on the workpiece supply program stored in the storage unit 250. Additionally, the transport control unit 232 is configured to control the arm part 140 so that the robotic hand 120 reaches the uppermost workpiece Wt of the group of workpieces W to be transported.

Furthermore, the transport control unit 232 is configured to control, when the robotic hand 120 reaches the uppermost workpiece Wt, the air suction source so that the uppermost workpiece Wt is held by the robotic hand 120 and to control the moving mechanism 160 and the arm part 140 so that the uppermost workpiece Wt held is lifted so as to be transported toward a transport destination such as the processing machine. At this time, the transport control unit 232 controls the arm part 140 to operate in the order of the first elevating operation, the stopping operation, and the second elevating operation as described above.

The magnet control unit 240 is configured to enable computerized numerical control (CNC control) of the workpiece loading mechanism 10, and performs a magnetic force control process of applying the magnetic force of the magnet floater 30 to the group of workpieces W to be transported. Specifically, the magnet control unit 240, as illustrated in Figure 4, includes a movement control unit 242 and an advance and retreat control unit 244.

The movement control unit 242 is configured to control the magnet moving mechanism 40 so that the magnet floater 30 reaches a position aligned with the group of workpieces W to be transported among a plurality of groups of workpieces W loaded on the workpiece mounting table 20, based on the workpiece supply program stored in the storage unit 250.

The advance and retreat control unit 244 is configured to control the advance and retreat mechanism 34 so that the magnet floater 30 switches from the off state to the on state during a time period from when the workpiece supply robot 100 contacts the uppermost workpiece Wt of the group of workpieces W to be transported until the uppermost workpiece Wt is lifted. Additionally, the advance and retreat control unit 244 is configured to control the advance and retreat mechanism 34 so that the magnet floater 30 switches from the on state to the off state between the above-described first elevating operation and second elevating operation by the robot control unit 230, and more specifically, during the above-described stopping operation by the robot control unit 230.

The storage unit 250 stores the workpiece supply program for causing the workpiece supply robot 100 to execute the transport (carrying-out) of the workpiece W from the workpiece loading mechanism 10, the transport (carrying-in) of the workpiece W to the processing machine or the like, the assistance of the processing (bending) of the workpiece W, and the transport (carrying-out) of a product (bent part) from the processing machine or the like. The workpiece supply program is configured such that each function of the above-described robot control unit 230 and magnet control unit 240 is achieved when the workpiece supply program is executed.

Specifically, the workpiece supply program is configured to cause the workpiece supply robot 100 to execute a holding position specifying process of specifying the holding position of the robotic hand 120 with respect to the workpiece W, and a transport control process of driving the moving mechanism 160 and the arm part 140 so that the robotic hand 120 reaches the position specified in the holding position specifying process. In addition, the workpiece supply program is configured to cause the workpiece loading mechanism 10 to execute a movement control process of driving the magnet moving mechanism 40 so that the magnet floater 30 reaches a position aligned with the group of workpieces W to be transported, and an advance and retreat control process of driving the advance and retreat mechanism 34 to switch the magnetic force on and off for the group of workpieces W to be transported.

In addition, the workpiece supply program is configured to cause the workpiece supply robot 100 to execute a robot contact process of contacting the uppermost workpiece Wt before the magnetic force for separating the uppermost workpiece Wt from the group of workpieces W stacked on the loading area LA is applied to the group of workpieces W, and a workpiece separation process of separating the uppermost workpiece Wt from the group of workpieces W in the state where the magnetic force for separating the uppermost workpiece Wt from the group of workpieces W is applied to the group of workpieces W.

Here, the workpiece separation process preferably includes a first elevating process of lifting the uppermost workpiece Wt from the group of workpieces W, and a second elevating process of further lifting the uppermost workpiece Wt after the first elevating process. In this case, the amount of elevation of the robotic hand 120 of the workpiece supply robot 100 in the first elevating process is preferably less than the amount of elevation of the robotic hand 120 of the workpiece supply robot 100 in the second elevating process. Additionally, in the workpiece separation process, the second elevating process is preferably executed by the workpiece supply robot 100 after the magnetic force applied to the group of workpieces W is reduced compared to the magnetic force in the first elevating process. Furthermore, the workpiece separation process preferably further includes a stopping process of stopping the elevation of the robotic hand 120 of the workpiece supply robot 100 between the first elevating process and the second elevating process.

### [Workpiece Supply Method according to Present Embodiment]

Figures 5 to 10 each are a schematic diagram illustrating the releasing operation of the uppermost workpiece according to the present embodiment.

A series of the workpiece supply method of the workpiece supply system 1 described above will be described with reference to Figures 5 to 10.

Specifically, first, the control device 200 reads the workpiece supply program from the storage unit 250, and from the information included in the read workpiece supply program, specifies the holding position of the robotic hand 120 with respect to the group of workpieces W to be transported, and specifies the position of the magnet floater 30 with respect to the group of workpieces W to be transported (holding position specifying step, magnetic force application position specifying step). Then, the robot control unit 230 of the control device 200 outputs a control signal to the workpiece supply robot 100, and the magnet control unit 240 outputs a control signal to the workpiece loading mechanism 10.

The workpiece supply robot 100 moves to the mounting surface 24 on which the group of workpieces W to be transported is mounted, based on the control signal from the robot control unit 230 (robot moving step). Also, similarly, the magnet floater 30 moves to the mounting surface 24 on which the group of workpieces W to be transported is mounted, based on the control signal from the magnet control unit 240 (magnet moving step).

The workpiece supply robot 100, as illustrated in Figure 5, moves to the mounting surface 24 on which the group of workpieces W to be transported is mounted, and then, based on the control signal from the robot control unit 230, as illustrated in Figure 6, the attraction parts 124 of the robotic hand 120 is brought into contact with the uppermost workpiece Wt of the group of workpieces W stacked on the mounting surface 24 (robot contacting step). In this robot contacting step, the magnet floater 30 is in an off state where the floater main body 32 has retreated. The robotic hand 120 holds the uppermost workpiece Wt when the attraction pads of the attraction parts 124 attract the surface of the uppermost workpiece Wt with the suction force caused by the air suction source.

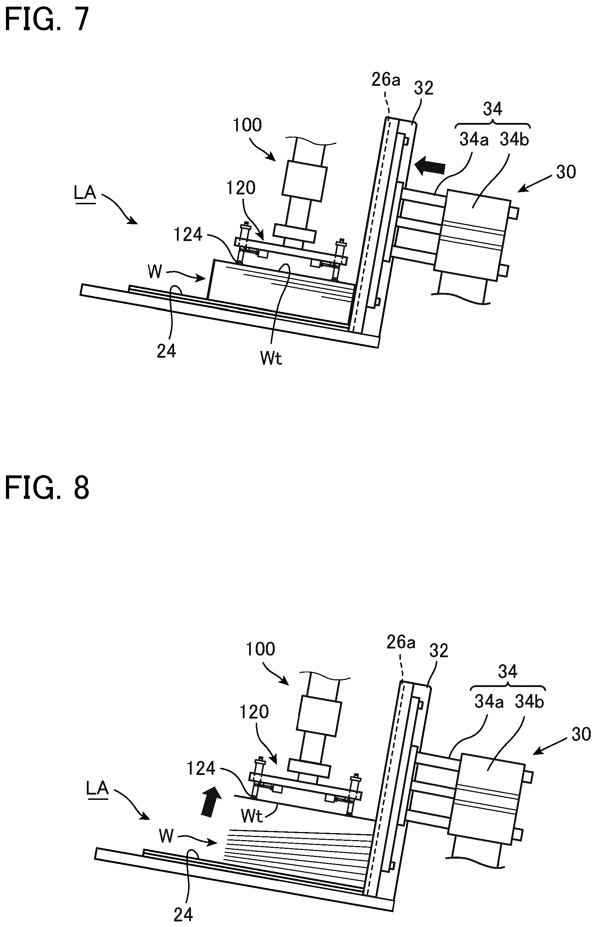

After the robot contacting step, the magnet floater 30 brings the floater main body 32 closer to the rear plate part 26a of the abutment plate part 26 by advancing the cylinder rod 34a of the advance and retreat mechanism 34, as illustrated in Figure 7, based on the control signal from the magnet control unit 240, switching from the off state to the on state (magnetic force applying step). In this way, a stronger magnetic force than before the robot contacting step is applied to the group of workpieces W.

In the state where the magnetic force is applied to the group of workpieces W (on state) in the magnetic force applying step, the workpiece supply robot 100, based on the control signal from the robot control unit 230, separates the uppermost workpiece Wt from the group of workpieces W as illustrated in Figure 8 (workpiece separating step).

Here, the workpiece separating step is executed in multiple stages, including a first elevating step of lifting the uppermost workpiece Wt from among the group of workpieces W, as illustrated in Figure 8, and a second elevating step of further lifting the uppermost workpiece Wt after the first elevating step, as illustrated in Figure 10. Also, as illustrated in Figure 9, the workpiece separating step further includes a stopping step of stopping the elevation of the workpiece supply robot 100 between the first elevating step and the second elevating step. As illustrated in Figures 8 and 10, the amount of elevation of the workpiece supply robot 100 in the first elevating step is less than the amount of elevation of the workpiece supply robot 100 in the second elevating step. Also, in these first and second elevating steps, the workpiece supply robot 100 elevates the uppermost workpiece Wt in a state of being separated from the rear plate part 26a of the abutment plate part 26 of the magnet floater 30 (a state where a slight gap is provided so as not to contact).

After the workpiece separating step has started, the magnet floater 30, based on the control signal from the magnet control unit 240, causes the cylinder rod 34a of the advance and retreat mechanism 34 to retreat as illustrated in Figure 9, thereby separating the floater main body 32 from the rear plate part 26a of the abutment plate part 26 and switching from the on state to the off state (magnetic force removing step). This reduces the magnetic force applied to the group of workpieces W compared to the magnetic force in the magnetic force applying step. This magnetic force removing step is preferably performed between the first elevating step and the second elevating operation step of the workpiece supply robot 100, and more specifically, during the stopping operation step of the workpiece supply robot 100.

Then, based on control signals from the robot control unit 230, the workpiece supply robot 100 supplies the uppermost workpiece Wt, which has been released from the group of workpieces W in the workpiece separating step (particularly the second elevating step), to the transport destination such as a processing machine. The series of the operations of the workpiece supply method by the workpiece supply system 1 according to the present embodiment are executed in the above-described steps.

### [Advantages of Workpiece Supply System according to Present Embodiment]

As described above, the workpiece supply system 1 according to the present embodiment includes the magnet floater 30 configured to separate the uppermost workpiece Wt from the group of workpieces W stacked on the loading area LA by magnetizing the group of workpieces W, and the workpiece supply robot 100 configured to be able to transport the uppermost workpiece Wt from among the group of workpieces W, wherein the magnet floater 30 is configured to be able to switch between an on state where a magnetic force is applied to the group of workpieces W and an off state where a magnetic force to be applied to the group of workpieces W is reduced compared to the magnetic force in the on state, and the workpiece supply robot 100 is configured to contact the uppermost workpiece Wt when the magnet floater 30 is in the off state and to separate the uppermost workpiece Wt from the group of workpieces W when the magnet floater 30 is in the on state.

In the workpiece supply system 1 according to the present embodiment, with such a configuration, the workpiece supply robot 100 contacts the uppermost workpiece Wt in a state where the magnetic force to be applied to the group of workpieces W is reduced, thereby making it possible for the workpiece supply robot 100 to securely hold the uppermost workpiece Wt. In addition, according to the workpiece supply system 1 of the present embodiment, in a state where the magnetic force to be applied to the group of workpieces W is strengthened, in order to separate the uppermost workpiece Wt from the group of workpieces W with the workpiece supply robot 100, the uppermost workpiece Wt is reliably separated from the lower workpiece W beneath the uppermost workpiece Wt, enabling only the uppermost workpiece Wt to be reliably transported. Furthermore, according to the workpiece supply system 1 of the present embodiment, it is possible to lift only the uppermost workpiece Wt in a state where the lower workpiece W is pressed toward the group of workpieces W with a repulsive force from the uppermost workpiece Wt, thereby making it possible to suppress misalignment and the like of the lower workpiece W with respect to the group of workpieces W. Then, as the results, according to the workpiece supply system 1 of the present embodiment, it is possible to suppress transport failure of the workpiece W and reliably supply only the uppermost workpiece Wt.

In the workpiece supply system 1 according to the present embodiment, the workpiece supply robot 100 is configured to be able to perform the first elevating operation of lifting the uppermost workpiece Wt from among the group of workpieces W and the second elevating operation of further lifting the uppermost workpiece Wt after the first elevating operation, the magnet floater 30 is configured to switch from the on state to the off state between the first elevating operation and the second elevating operation of the workpiece supply robot 100, and the amount of elevation in the first elevating operation is less than the amount of elevation in the second elevating operation. With such a configuration, the workpiece supply system 1 according to the present embodiment has the advantage that the magnet floater 30 switches to the off state when the uppermost workpiece Wt is elevated by a certain amount, which makes it possible to suppress sticking of the uppermost workpiece Wt and the lower workpiece W beneath the uppermost workpiece Wt to the magnet floater 30.

Furthermore, in the workpiece supply system 1 according to the present embodiment, the workpiece supply robot 100 is configured to be able to perform a stopping operation of stopping elevation between the first elevating operation and the second elevating operation, and the magnet floater 30 is configured to switch from the on state to the off state during the stopping operation of the workpiece supply robot 100. With such a configuration, the workpiece supply system 1 according to the present embodiment can press the lower workpiece W against the group of workpieces W side with the repulsive force from the uppermost workpiece Wt during the first elevating operation and in the initial stage of the stopping operation (until the magnet floater 30 switches to the off state), thereby making it possible to suppress the inclination due to the floating of the lower workpiece W. In addition, according to the workpiece supply system 1 of the present embodiment, by temporarily stopping the workpiece supply robot 100 after the first elevating operation with a small amount of elevation, it is possible to further suppress the inclination due to the floating of the lower workpiece W compared to the case where the workpiece supply robot 100 is elevated without performing the stopping operation. The workpiece supply system 1 according to the present embodiment has the advantage that, by suppressing the inclination of such a lower workpiece W, it is possible to suppress sticking of the lower workpiece W to the magnet floater 30.

In the workpiece supply system 1 according to the present embodiment, the workpiece supply robot 100 is configured to be able to transport the uppermost workpiece Wt in a state of being separated from the magnet floater 30. With such a configuration, the workpiece supply system 1 according to the present embodiment has the advantage of being able to further suppress transport failure because it becomes possible to suppress frictional resistance that causes the workpiece Wt to fall or the like.

### [Modified Examples]

Although the preferred embodiment of the present invention has been described above, the technical scope of the present invention is not limited to the scopes described in the present and second embodiments. Various modifications or improvements can be added to the embodiment described above.

For example, the workpiece supply system 1 may further include a camera for specifying the group of workpieces W stacked on the loading area LA, and the control device 200 may be configured to control the workpiece loading mechanism 10 and the workpiece supply robot 100 based on the position of the group of workpieces W specified by the camera.

In the embodiment described above, the magnet floater 30 has been described as switching between the on state and the off state by the advance and retreat mechanism 34 causing the floater main body 32 to advance and retreat, but it is not limited to this. For example, the advance and retreat mechanism 34 may be configured to be able to adjust the magnetic force to be applied to the workpiece W by changing the advance and retreat distance of the floater main body 32 in multiple stages between the on state and the off state. Also, when using an electromagnet as a magnet, it can be configured to switch between the on state and the off state by turning the power on and off.

### Reference Signs List

1: Workpiece supply system
10: Workpiece loading mechanism
20: Workpiece mounting table
22: Mounting table unit
22a: Handle
22b: Wheel
24: Mounting surface
26: Abutment plate part
26a: Rear plate part
26b: Side plate part
27a: Flange part
27b: Flange part
30: Magnet floater
32: Floater main body
34: Advance and retreat mechanism
34a: Cylinder rod
34b: Cylinder
36: Carriage base
40: Magnet moving mechanism
42: Guide rail
44: Drive section
100: Workpiece supply robot
120: Robotic hand
122: Hand main body
124: Attraction part
130: Surface detection unit
140: Arm part
160: Moving mechanism
160a: Rail part
160b: Base table
200: Control device
210: Input unit
220: Display unit
230: Robot control unit
232: Transport control unit
234: Holding position specifying unit
240: Magnet control unit
242: Movement control unit
244: Advance and retreat control unit
250: Storage unit
F: Frame
LA: Loading area
W: Workpiece
Wt: Uppermost workpiece

## Claims

1. A workpiece supply system, comprising:
a magnet floater configured to separate an uppermost workpiece from a group of workpieces stacked on a loading area by magnetizing the group of workpieces; and
a workpiece supply robot configured to be able to transport the uppermost workpiece from among the group of workpieces,
wherein the magnet floater is configured to be able to switch between an on state where a magnetic force is applied to the group of workpieces and an off state where a magnetic force to be applied to the group of workpieces is reduced compared to the magnetic force in the on state, and
the workpiece supply robot is configured to contact the uppermost workpiece when the magnet floater is in the off state and to separate the uppermost workpiece from the group of workpieces when the magnet floater is in the on state.

2. The workpiece supply system according to claim 1,
wherein
the workpiece supply robot is configured to be able to perform a first elevating operation of lifting the uppermost workpiece from among the group of workpieces and a second elevating operation of further lifting the uppermost workpiece after the first elevating operation,
the magnet floater is configured to switch from the on state to the off state between the first elevating operation and the second elevating operation of the workpiece supply robot, and
an amount of elevation in the first elevating operation is less than an amount of elevation in the second elevating operation.

3. The workpiece supply system according to claim 2,
wherein
the workpiece supply robot is configured to be able to perform a stopping operation of stopping elevation between the first elevating operation and the second elevating operation, and
the magnet floater is configured to switch from the on state to the off state during the stopping operation of the workpiece supply robot.

4. The workpiece supply system according to any one of claims 1 to 3, wherein
the workpiece supply robot is configured to be able to transport the uppermost workpiece in a state of being separated from the magnet floater.

5. A workpiece supply method, comprising:
bringing a workpiece supply robot into contact with an uppermost workpiece among a group of workpieces stacked on a loading area;
applying, after the bringing, a stronger magnetic force than a magnetic force before the bringing to the group of workpieces; and
separating the uppermost workpiece from the group of workpieces with the workpiece supply robot in a state where the magnetic force is applied to the group of workpieces.

6. The workpiece supply method according to claim 5,
wherein
the separating comprises:
lifting the uppermost workpiece from the group of workpieces, in a first elevating step; and
further lifting the uppermost workpiece after the first elevating step, in a second elevating step,
wherein an amount of elevation of the workpiece supply robot in the first elevating step is less than an amount of elevation of the workpiece supply robot in the second elevating step, and
between the first elevating step and the second elevating step, a magnetic force to be applied to the group of workpieces is reduced compared to the stronger magnetic force in the applying.

7. The workpiece supply method according to claim 6,
wherein
the separating further comprises stopping elevation of the workpiece supply robot between the first elevating step and the second elevating step, and
in the stopping, a magnetic force to be applied to the group of workpieces is reduced compared to the stronger magnetic force in the applying.

8. A workpiece supply program causing a workpiece supply robot to execute:
a robot contact process of contacting an uppermost workpiece before a magnetic force for separating the uppermost workpiece from a group of workpieces stacked on a loading area is applied to the group of workpieces; and
a workpiece separation process of separating the uppermost workpiece from the group of workpieces in a state where the magnetic force for separating the uppermost workpiece from the group of workpieces is applied to the group of workpieces.

9. The workpiece supply program according to claim 8,
wherein
the workpiece separation process comprises:
a first elevating process of lifting the uppermost workpiece from the group of workpieces; and
a second elevating process of further lifting the uppermost workpiece after the first elevating process,
wherein an amount of elevation of the workpiece supply robot in the first elevating process is less than an amount of elevation of the workpiece supply robot in the second elevating process, and
after a magnetic force to be applied to the group of workpieces is reduced compared to a magnetic force in the first elevating process, the workpiece supply program causes the workpiece supply robot to execute the second elevating process.

10. The workpiece supply program according to claim 9,
wherein
the workpiece separation process further comprises a stopping process of stopping elevation of the workpiece supply robot between the first elevating process and the second elevating process.
